# EUROPÄISCHE PATENTANMELDUNG

(11) **EP 4 289 250 A1**
(43) Veröffentlichungstag der Anmeldung: **13.12.2023**
(21) Anmeldenummer: 23174124.0
(22) Anmeldetag: 17.05.2023
(51) Int. Cl.: A01C 23/00

(54) **GÜLLEAUSLAUFSCHUTZVORRICHTUNG**

(30) Priorität: 09.06.2022 DE 102022002047
(71) Anmelder: Zunhammer, Sebastian, 83301 Traunreut (DE)
(72) Erfinder: Zunhammer, Sebastian, 83301 Traunreut (DE)
(74) Vertreter: Einsiedler, Johannes

(57) **Zusammenfassung**

Die vorliegende Erfindung betrifft eine Gülleauslaufschutzvorrichtung (10) für einen Y-förmigen Gülleauslauf (5), der zur Befestigung an einem Schlauch (6a) und/oder einer Schlauchbefestigung (7) eines Schleppschuhverteilers vorgesehen ist, die eine Y-förmige Befestigungsvorrichtung (1), in die der Gülleauslauf (5) ein- oder auflegbar ist, und Abstützvorrichtungen (2a, 2b), die an einer dem Gülleauslauf (5) gegenüberliegenden Seite der Befestigungsvorrichtung (1) angebracht sind, aufweist.

## Beschreibung

Die Erfindung betrifft eine Gülleauslaufschutzvorrichtung aufweisend eine Befestigungsvorrichtung, in die ein Gülleauslauf ein- oder auflegbar ist, und Abstützvorrichtungen. Weiter betrifft die Erfindung eine Gülleauslaufvorrichtung mit einem Gülleauslauf und einer derartigen Gülleauslaufschutzvorrichtung. Zudem betrifft die Erfindung einen Schleppschuhverteiler mit mindestens einem Schlauch, wenigstens einer Schlauchbefestigung und zumindest einer derartigen Gülleauslaufvorrichtung.

Gülleausläufe, welche unter anderem bei Schleppschuhverteilern Anwendung finden, werden in der Landwirtschaft zur streifenförmigen Ausbringung von Gülle auf landwirtschaftlichen Boden häufig eingesetzt. Vor allem auf Grünland erweist sich hierbei ein Schleppschuhverteiler im Vergleich zu herkömmlich verwendeten Schleppschläuchen als vorteilhaft. Die Schleppschuhe teilen insbesondere während der Überfahrt den Pflanzenbestand, um die Gülle in einem schmalen Streifen am Boden unter den Trieben abzulegen. Dabei bleiben die Pflanzen selbst sauber. Die Gülle wächst nicht mit heraus, sondern nährt sie an der Wurzel.

Hierbei bekannt sind Y-förmige Gülleausläufe, welche auch als Schleppschuhdüsen bezeichnet werden. Dabei wird ein Schlauchende in zwei separate, vollständig umschlossene Rohre aufgeteilt. Alternative Verteilvorrichtungen für die Gülle sind beispielsweise aus der Druckschrift DE 20 2021 102 219 U1 bekannt.

Jegliche Gülleausläufe werden zum Ausbringen der Gülle über den zu düngenden Boden gezogen. Unebenheiten und andere mechanische Einflüsse können dabei nachteilig die Gülleausläufe, die meist aus Kunststoff sind, beschädigen oder zumindest verschleißen.

Es ist eine Aufgabe der Erfindung, eine Gülleauslaufschutzvorrichtung für einen Gülleauslauf eines Schleppschuhverteilers bereitzustellen, die den Gülleauslauf vor mechanischen Einflüssen schützt und so Beschädigungen und ähnliches am Gülleauslauf verhindert oder zumindest die Beschädigungsgefahr reduziert.

Diese Aufgabe wird durch eine Gülleauslaufschutzvorrichtung mit den Merkmalen des Anspruchs 1, durch eine Gülleauslaufvorrichtung mit den Merkmalen des Anspruchs 9 und durch einen Schleppschuhverteiler mit den Merkmalen des Anspruchs 10 gelöst. Vorteilhafte Ausgestaltungen und Weiterbildungen sind Gegenstand der Unteransprüche.

Erfindungsgemäß findet eine Gülleauslaufschutzvorrichtung für einen Y-förmigen Gülleauslauf, der zur Befestigung an einem Schlauch und/oder einer Schlauchbefestigung eines Schleppschuhverteilers vorgesehen ist, Verwendung. Die Gülleauslaufschutzvorrichtung umfasst eine Y-förmige Befestigungsvorrichtung, in die der Gülleauslauf ein- oder auflegbar ist, und Abstützvorrichtungen, die an einer dem Gülleauslauf gegenüberliegenden Seite der Befestigungsvorrichtung angebracht sind.

Ein Schleppschuhverteiler weist vorzugsweise eine Mehrzahl an Schläuchen auf, die an der Schlauchbefestigung befestigt sind. Als Schlauchbefestigung können Blattfedern dienen. Die Schläuche können beispielsweise mittels Hülsen und/oder Kabelbindern an der Schlauchbefestigung fixiert werden.

Der Gülleauslauf weist eine Y-Form auf und ist an dem Schlauch befestigt. Insbesondere weist der Gülleauslauf zwei Gülleauslaufarme auf, die die Y-Form bilden. Vorzugsweise ist an jedem Schlauch des Schleppschuhverteilers jeweils ein Y-förmiger Auslauf befestigt. Durch die Y-Form teilt der Gülleauslauf im Einsatz den Güllestrom aus dem Schlauch in zwei dünne Bänder mit vorzugsweise etwa 12,5 cm Reihenabstand. Diese können von den Pflanzen zeitnah überschattet werden und sickern insbesondere zeitnah in den Boden ein. Dadurch lässt sich mit Vorteil eine Blattverschmutzung verhindern. Der Gülleauslauf weist vorzugsweise einen robusten, im Gewicht leichten und zugleich korrosionsbeständigen Kunststoff auf. Der Gülleauslauf ist beispielsweise eine Düse, die vorzugsweise strömungsoptimiert und möglichst verstopfungsfrei konzipiert ist.

Die Befestigungsvorrichtung weist ebenso eine Y-Form auf. Dabei ist die Y-Form der Befestigungsvorrichtung auf die Y-Form des Gülleauslaufs abgestimmt, sodass der Gülleauslauf formgerecht in die Befestigungsvorrichtung einlegbar oder auf diese auflegbar ist. Der Gülleauslauf wird dabei derart in die Befestigungsvorrichtung eingelegt oder auf diese aufgelegt, dass im Einsatz der Gülleauslauf auf einer der Bodenbearbeitung abgewandten Seite der Befestigungsvorrichtung angeordnet ist. Dadurch wird während der Bodenbearbeitung der Gülleauslauf von der Befestigungsvorrichtung geschützt, indem die Befestigungsvorrichtung und nicht der Gülleauslauf über den zu düngenden Boden gezogen wird.

Die Abstützvorrichtungen sind an einer dem Gülleauslauf gegenüberliegenden Seite der Befestigungsvorrichtung angebracht, sodass diese zur Bodenbearbeitung dienen und im Einsatz in direktem Kontakt mit dem zu düngenden Boden stehen. Insbesondere erstreckt sich jeweils eine Abstützvorrichtung entlang eines Y-Arms der Befestigungsvorrichtung. Die Abstützvorrichtung ist dabei senkrecht zu einer Hauptrichtung der Befestigungsvorrichtung ausgerichtet. Insbesondere bilden die Abstützvorrichtungen Schlitzkufen, die im Einsatz auf den Boden gedrückt werden, wodurch diese eine schmale Furche in die Erde ziehen, in die die Gülle abgelegt wird. Unebenheiten des Bodens werden über eine Federung des Schleppschuhverteilers ausgeglichen. So bleiben die Abstützvorrichtungen während der Bodenbearbeitung konstant am Boden. Zudem kann eine gerade und möglichst gleichmäßig Tiefe Furche gewährleistet werden.

Bei einer vorteilhaften Ausführungsform ist die Befestigungsvorrichtung eben ausgebildet. Die ebene Form der Befestigungsvorrichtung entspricht dabei insbesondere im Wesentlichen der Form des Gülleauslaufs mit befestigtem Schlauch. Beispielsweise erstreckt sich ein gerader Bereich der Befestigungsvorrichtung entlang des vorgesehenen Schlauchs. Dieser gerade Bereich gabelt sich an einem Gülleauslassende in die Y-Form auf, die ebenfalls eben ausgebildet ist und der Form der Y-förmigen Gülleauslaufarme folgt. Im Betrieb ist dadurch zwischen zu bearbeitendem Boden und Gülleauslauf die Befestigungsvorrichtung zum Schutz des Gülleauslaufs angeordnet. Die Abstützvorrichtungen bearbeiten dabei auf der dem Gülleauslauf gegenüberliegenden Seite der Befestigungsvorrichtung den Boden beziehungsweise furchen diesen auf.

Bei einer alternativen Ausführungsform weist die Befestigungsvorrichtung im Querschnitt zwei V-förmige Ausbuchtungen auf, in die die Gülleauslaufarme des Gülleauslaufs einlegbar sind. Insbesondere die Y-Arme der Befestigungsvorrichtung weisen im Querschnitt je eine V-förmige Ausbuchtung auf, die wie eine Schale für jeweils einen Gülleauslaufarm wirken. Dadurch sind die Gülleauslaufarme sicher und zuverlässig in den V-förmigen Ausbuchtungen eingebettet. An der Kante der V-Form der Ausbuchtungen ist jeweils eine der Abstützvorrichtungen befestigt.

Bei einer weiteren vorteilhaften Ausführungsform sind die Abstützvorrichtungen in die Befestigungsvorrichtung beziehungsweise die Ausbuchtungen eingeklinkt. Hierzu weisen die Y- Arme der Befestigungsvorrichtung oder die Ausbuchtungen insbesondere eine Ausnehmung beziehungsweise einen Durchbruch auf, beispielsweise einen Schlitz, in den ein Teil der jeweiligen Abstützvorrichtung durchgeführt insbesondere eingeklinkt wird. Die Abstützvorrichtung erstreckt sich demnach entlang der Y-Arme der Befestigungsvorrichtung oder der V-Kante der jeweiligen Ausbuchtung und weist zudem einen Teilbereich auf, mit dem die Abstützvorrichtung durch den jeweiligen Durchbruch geführt und an der Befestigungsvorrichtung beziehungsweise Ausbuchtung befestigt wird.

Bei einer weiteren vorteilhaften Ausführungsform sind die Abstützvorrichtungen an der Befestigungsvorrichtung oder den Ausbuchtungen angeschweißt. Vorzugsweise ist lediglich der Teilbereich der Abstützvorrichtung an der Befestigungsvorrichtung oder der Ausbuchtung angeschweißt, der durch den Durchbruch geführt ist. Bevorzugt findet eine Punktschweißung Anwendung.

Bei einer weiteren vorteilhaften Ausführungsform sind die Abstützvorrichtungen mit der Befestigungsvorrichtung oder den Ausbuchtungen lösbar fest verbunden. Insbesondere durch das Durchführen des Teilbereichs der Abstützvorrichtung durch den jeweiligen Durchbruch und durch das Einklinken und Punktverschweißen dieses Teilbereichs lässt sich die Schweißstelle durch gezielte mechanische Einwirkungen lösen, wodurch die Abstützvorrichtung von der Befestigungsvorrichtung oder der Ausbuchtung getrennt werden kann. Dadurch kann mit Vorteil ein einfaches Austauschen der Abstützvorrichtungen gewährleistet werden. Im Falle eines Verschleißes oder einer Beschädigung der Abstützvorrichtungen, die im Einsatz unter Druck über den zu düngenden Boden gezogen werden, können die Abstützvorrichtungen ausgetauscht beziehungsweise ersetzt werden, ohne dabei die gesamte Befestigungsvorrichtung ersetzen zu müssen.

Bei einer weiteren vorteilhaften Ausführungsform umfassen die Befestigungsvorrichtung und/oder die Abstützvorrichtungen Stahl. Da die Befestigungsvorrichtung und die Abstützvorrichtungen nicht einstückig ausgebildet sind, sondern als Einzelkomponenten hergestellt werden, können diese sich in ihrem Material unterscheiden. Das Material der einzelnen Komponenten kann dabei mit Vorteil an vorgesehene Eigenschaften und Anforderungen angepasst sein. Da die Befestigungsvorrichtung lediglich als Schutz des Kunststoff-aufweisenden Gülleauslaufs dient, sind an dessen Material nicht derart hohe Anforderungen zu stellen wie an die Abstützvorrichtungen, die im Einsatz den zu düngenden Boden pflügen. Die Befestigungsvorrichtung kann daher im Vergleich ein niedrigwertigeres Material als die Abstützvorrichtungen aufweisen. Beispielsweise ist die Befestigungsvorrichtung aus einem niedrigwertigem Stahl, während die Abstützvorrichtungen aus einem hochwertigen Stahl gefertigt sind.

Aufgrund dieser mehrzahligen Komponenten und insbesondere aufgrund der getrennten Herstellung der Befestigungsvorrichtung und der Abstützvorrichtungen ist es zudem möglich, die einzelnen Komponenten neben dem Material auch in weiteren Eigenschaften an die jeweiligen Anforderungen anzupassen. Beispielsweise ist die Befestigungsvorrichtung im Querschnitt in ihrer Dicke geringer ausgebildet als die Abstützvorrichtungen.

Bei einer weiteren vorteilhaften Ausführungsform umfasst die Befestigungsvorrichtung ein Befestigungselement, an dem der Gülleauslauf befestigbar, insbesondere einklinkbar und/oder ausklinkbar, ist. Eine einfache und insbesondere wiederholbare Befestigung der Befestigungsvorrichtung an dem Gülleauslauf ermöglicht sich mit Vorteil. Ein einfaches und schnelles Lösen der Befestigungsvorrichtung, zum Beispiel zum Reinigen oder zum Austausch basierend auf Verschleißerscheinungen, ermöglicht sich bevorzugt.

Bei einer weiteren vorteilhaften Ausführungsform sind die Abstützvorrichtungen abgerundet ausgebildet. Insbesondere sind jegliche Kanten, die an der der Befestigungsvorrichtung abgewandten Seite ausgebildet sind, abgerundet und insbesondere kantenbeziehungsweise eckfrei ausgeführt. Steine und andere Unebenheiten können durch die abgerundeten Kanten der Abstützvorrichtungen im Einsatz zur Seite transportiert insbesondere geschoben werden, ohne dabei den Kanten und Ecken der Abstützvorrichtungen der Gefahr einer Beschädigung auszusetzen.

Weiter betrifft die Erfindung eine Gülleauslaufvorrichtung mit einem Y-förmigen Gülleauslauf und einer wie oben beschriebenen Gülleauslaufschutzvorrichtung. Zudem betrifft die Erfindung einen Schleppschuhverteiler mit mindestens einem Schlauch, wenigstens einer Schlauchbefestigung und zumindest einer Gülleauslaufvorrichtung, die unter anderem eine wie oben beschriebene Gülleauslaufschutzvorrichtung umfasst.

Jegliche Merkmale, Ausgestaltungen, Ausführungsformen und Vorteile der Gülleauslaufschutzvorrichtung finden auch in Zusammenhang mit der erfindungsgemäßen Gülleauslaufvorrichtung sowie mit dem erfindungsgemäßen Schleppschuhverteiler Anwendung, und umgekehrt.

Die Erfindung wird anhand der nachfolgenden, lediglich Beispiele darstellenden Ausführungen der Erfindung näher erläutert. Es zeigen:
- Figuren 1A bis 1 D:: jeweils schematische Ansichten eines erfindungsgemäßen Ausführungsbeispiels einer Gülleauslaufschutzvorrichtung,
- Figuren 2A bis 2F:: jeweils schematische Ansichten eines erfindungsgemäßen Ausführungsbeispiels einer Gülleauslaufvorrichtung,
- Figuren 3A, 3B:: jeweils schematische Ansichten eines weiteren erfindungsgemäßen Ausführungsbeispiels einer Gülleauslaufschutzvorrichtung,
- Figuren 3C bis 3I:: jeweils schematische Ansichten eines weiteren erfindungsgemäßen Ausführungsbeispiels einer Gülleauslaufvorrichtung, und
- Figuren 4A bis 4D: jeweils schematische Ansichten eines erfindungsgemäßen Ausführungsbeispiels einer Gülleauslaufschutzvorrichtung beziehungsweise einer Gülleauslaufvorrichtung.

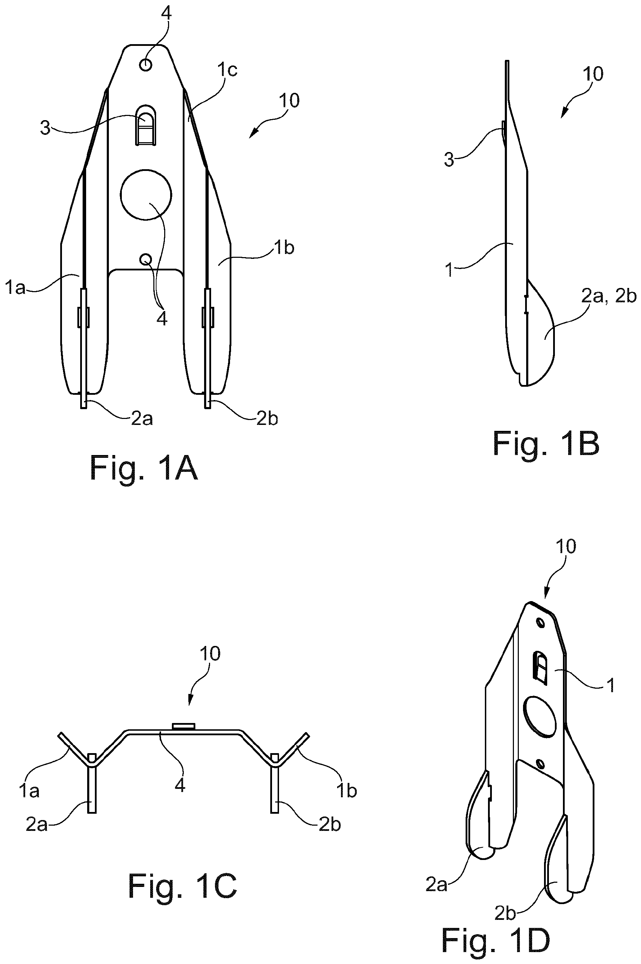

In den Figuren 1A bis 1D ist jeweils eine erfindungsgemäße Gülleauslaufschutzvorrichtung 10 schematisch dargestellt. Figur 1A zeigt eine Unteransicht auf die Gülleauslaufschutzvorrichtung 10. Die Gülleauslaufschutzvorrichtung 10 weist eine Y-förmige Befestigungsvorrichtung 1 auf. Die Befestigungsvorrichtung 1 weist zwei Y-Arme 1a, 1b auf, die mit einem gemeinsamen Befestigungsbereich 1c verbunden sind. Der Befestigungsbereich 1c dient zum Befestigen eines Gülleauslaufs auf der Gülleauslaufschutzvorrichtung 10. Hierzu weist die Befestigungsvorrichtung 1 unter anderem ein Befestigungselement 3 auf, an dem der Gülleauslauf einklinkbar und/oder ausklinkbar ist. Zudem weist der Befestigungsbereich 1c Durchbrüche 4 auf, die mittels weiterer Befestigungselemente wie beispielsweise Schrauben oder ähnlichem den Gülleauslauf auf der Gülleauslaufschutzvorrichtung 10 fixieren können.

Auf einer der für den Gülleauslauf vorgesehenen Seite gegenüberliegenden Seite sind an den Y-Armen 1a, 1b Abstützvorrichtungen 2a, 2b angebracht. Entlang jedes Y-Arms 1a, 1b erstreckt sich insbesondere jeweils eine Abstützvorrichtung 2a, 2b. Die Abstützvorrichtungen 2a, 2b sind mit Befestigungsmittel zur Befestigung durch einen Durchbruch des jeweiligen Y-Arms 1a, 1b geführt, eingeklinkt und mittels Punktschweißung fixiert. Dadurch bildet sich eine lösbare und dennoch stabile, fest verbundene Befestigung. Ein einfaches Austauschen der Abstützvorrichtungen 2a, 2b, zum Beispiel bei Verschleiß oder Beschädigung, ermöglicht sich mit Vorteil.

Die Abstützvorrichtungen 2a, 2b ragen senkrecht von den Y-Armen 1a, 1b ab, sodass sie (Schlitz-)Kufen bilden, die zum Furchen von zu düngendem Boden geeignet sind. Diese abstehenden Kufen sind unter anderem in Figur 1B gezeigt. Figur 1B stellt die Gülleauslaufschutzvorrichtung 10 des Ausführungsbeispiels der Figur 1A in einer Seitenansicht dar.

Figur 1C zeigt die Gülleauslaufschutzvorrichtung 10 des Ausführungsbeispiels der Figur 1A in einem Querschnitt. Die Y-Arme 1a, 1b sind jeweils als eine V-förmige Ausbuchtung ausgebildet, in die Gülleauslaufarme des Gülleauslaufs einlegbar sind. An der Kante der V-Form ist jeweils die Abstützvorrichtung 2a, 2b befestigt, die durch einen Durchbruch an der V-Kante durchgeführt ist und als Kufe auf dieser verläuft.

In Figur 1D ist eine dreidimensionale Schrägsicht der Gülleauslaufschutzvorrichtung 10 des Ausführungsbeispiels der Figur 1A gezeigt. Die Abstützvorrichtungen 2a, 2b weisen eine abgerundete Form auf. Insbesondere sind Kanten der Abstützvorrichtungen 2a, 2b abgerundet ausgebildet, sodass keine Ecken und Spitzen gebildet sind. Die Y-förmige Befestigungsvorrichtung 1 ist aus Stahl. Ebenso sind die Abstützvorrichtungen 2a, 2b aus Stahl gebildet. Da die Abstützvorrichtungen 2a, 2b zur Bodenbearbeitung vorgesehen sind, ist als Material ein hochwertiger Stahl geeignet. Die Befestigungsvorrichtung 1 dagegen dient nicht zur Bodenbearbeitung, sondern ist lediglich zur Befestigung und Halterung des Gülleauslaufs vorgesehen. Daher ist hierfür ein niederwertiger Stahl ausreichend.

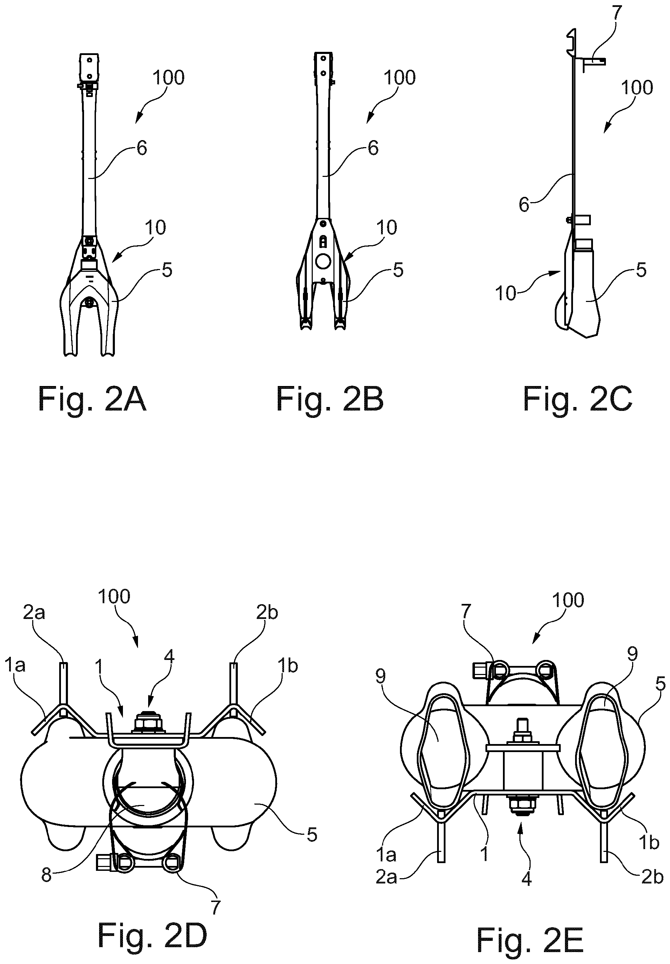

Die Figuren 2A bis 2F zeigen eine Gülleauslaufvorrichtung 100 mit einem Y-förmigen Gülleauslauf 5 und einer Gülleauslaufschutzvorrichtung 10. Dabei ist ein Schlauchende in zwei separate, vollständig umschlossene Rohre aufgeteilt, wodurch sich die Y-Form bildet. Wie in den Figuren 2A bis 2C dargestellt ist, ist der Y-förmige Gülleauslauf 5 in den V-förmigen Y-Armen der Gülleauslaufschutzvorrichtung 10 eingelegt. Als Befestigung dienen Schrauben und das Befestigungselement 3, an dem der Gülleauslauf 5 einklinkbar und/oder ausklinkbar ist. Ein einfaches und unkompliziertes Befestigen und Austauschen der Gülleauslaufschutzvorrichtung 10 ermöglicht sich mit Vorteil.

An der Gülleauslaufschutzvorrichtung 10, insbesondere an einem der Y-Arme gegenüberliegenden Seite, ist zudem ein Schlauchhalter 6 befestigt, beispielsweise mittels einer Schraubenverbindung. Der hierfür vorgesehene Schlauch ist Teil eines Schleppschuhverteilers. Der Schlauch ist insbesondere mit einer Schlauchbefestigung 7 am Schlauchhalter 6 befestigbar und mit dem Gülleauslauf 5 fluidisch verbindbar. Insbesondere endet der Schlauch an einem Gülleeingang 8 des Gülleauslaufs 5, sodass durch den Schlauch fließende Gülle an einem Ende in den Gülleauslauf 5 eindringt und am anderen Ende aus dem Gülleauslauf 5 auf den zu düngenden Boden abgegeben wird.

Die Figuren 2D und 2E zeigen die Gülleauslaufvorrichtung 100 des Ausführungsbeispiels der Figuren 2A bis 2D im Querschnitt. Insbesondere zeigen Figur 2D den Gülleeingang 8 des Gülleauslaufs 5 und Figur 2E die Gülleausgänge 9 des Gülleauslaufs 5. Der Gülleeingang 8 ist mittig zu den Gülleauslaufarmen angeordnet, sodass durch den Gülleeingang 8 geleitete Gülle sich möglichst gleichmäßig auf die zwei Gülleauslaufarme verteilt. Die schnabelförmigen Gülleausgänge 9 geben die Gülle im Einsatz auf den zu düngenden Boden in zwei schmalen und parallel verlaufenen Streifen ab.

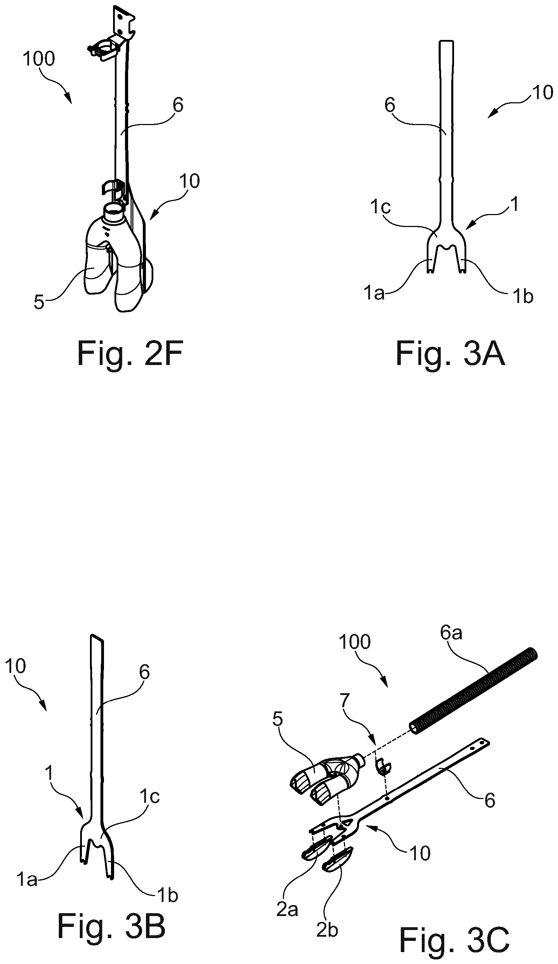

Figur 2F zeigt die Gülleauslaufvorrichtung 100 des Ausführungsbeispiels der Figuren 2A bis 2E in einer dreidimensionalen Seitenansicht.

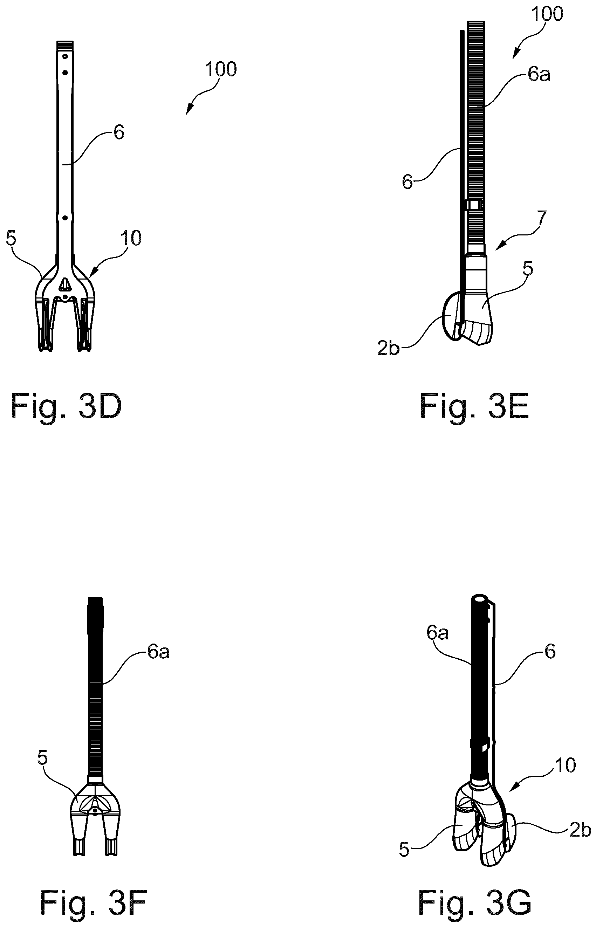

In den Figuren 3A und 3B ist jeweils eine weitere erfindungsgemäße Gülleauslaufschutzvorrichtung 10 schematisch dargestellt. Figur 3A zeigt eine Unteransicht der Gülleauslaufschutzvorrichtung 10. Figur 3B stellt eine dreidimensionale Schrägsicht der Gülleauslaufschutzvorrichtung 10 des Ausführungsbeispiels der Figur 3A dar.

Die Gülleauslaufschutzvorrichtung 10 weist eine Y-förmige Befestigungsvorrichtung 1 auf. Die Befestigungsvorrichtung 1 weist zwei Y-Arme 1a, 1b auf, die mit einem gemeinsamen Befestigungsbereich 1c verbunden sind. Im Unterschied zu den vorherigen Ausführungsbeispielen ist die Gülleauslaufschutzvorrichtung 10 nicht V-förmig, sondern eben ausgebildet. Insbesondere weisen die Y-Arme der Befestigungsvorrichtung 1 keine Ausbuchtungen auf. Ein vorgesehener Gülleauslauf wird bei der ebenen Ausgestaltung auf die Befestigungsvorrichtung 1 aufgelegt und daran befestigt. Zudem ist im Unterschied zu den vorherigen Ausführungsbeispielen an der Gülleauslaufschutzvorrichtung 10, insbesondere an einem der Y-Arme gegenüberliegenden Seite, ein Schlauchhalter 6 angeordnet, der beispielsweise einstückig mit der Befestigungsvorrichtung 1 ausgebildet ist.

Figur 3C zeigt eine Explosionsdarstellung einer Gülleauslaufvorrichtung 100, die eine Gülleauslaufschutzvorrichtung 10 des Ausführungsbeispiels der Figuren 3A, 3b umfasst, auf der ein Y-förmigen Gülleauslauf 5 angebracht ist. An dem Gülleauslauf 5 und insbesondere auf dem Schlauchhalter 6 ist ein Schlauch 6a angebracht, der mittels einer Schlauchbefestigung 7 lösbar befestigt ist. Auf einer dem Gülleauslauf 5 gegenüberliegenden Seite sind an den Y-Armen 1a, 1b Abstützvorrichtungen 2a, 2b angebracht.

Die Figuren 3D bis 3G zeigen unterschiedliche Ansichten der Gülleauslaufvorrichtung 100 mit Schlauchhalter 6 und Schlauch 6a des Ausführungsbeispiels der Figur 3C in montiertem Zustand.

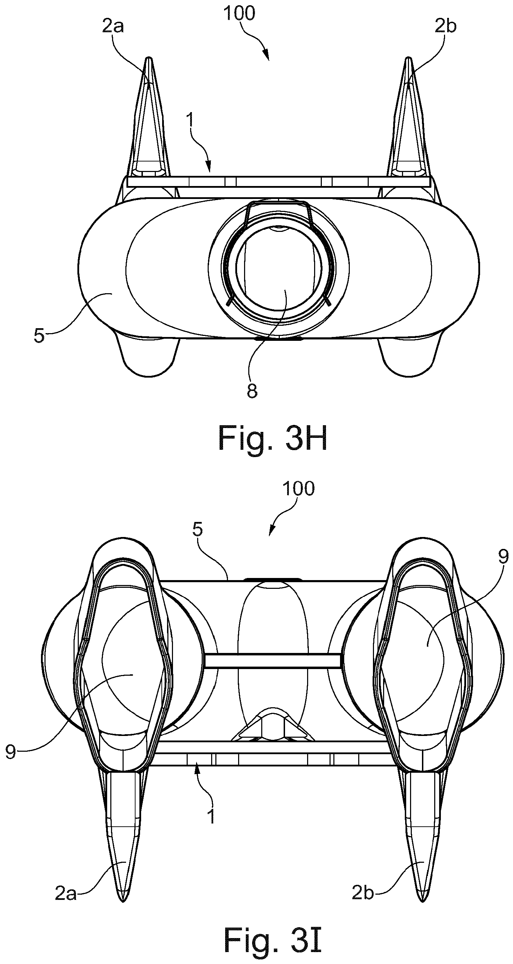

Die Figuren 3H und 3I zeigen die Gülleauslaufvorrichtung 100 des Ausführungsbeispiels der Figuren 3C bis 3G in einem vorder- beziehungsweise rückseitigen Querschnitt. Insbesondere zeigt Figur 3H den Gülleeingang 8 des Gülleauslaufs 5 und Figur 3I die Gülleausgänge 9 des Gülleauslaufs 5.

Im Übrigen stimmen die Ausführungsbeispiele der Figuren 3A bis 3I mit den vorherigen Ausführungsbeispielen überein.

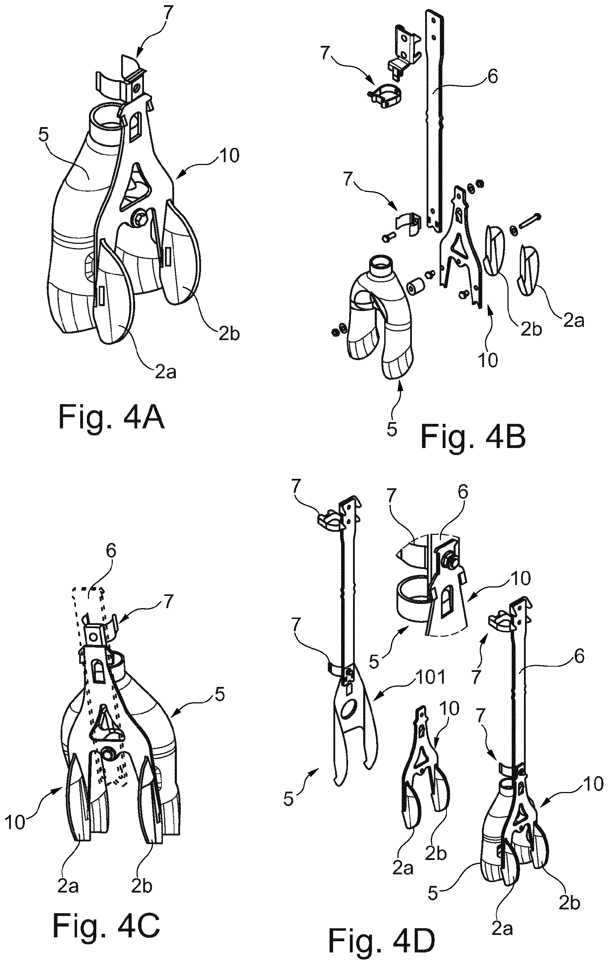

In Figur 4A ist eine weitere erfindungsgemäße Gülleauslaufschutzvorrichtung 10 mit darauf montiertem Gülleauslauf 5 schematisch dargestellt. Die Gülleauslaufschutzvorrichtung 10 weist eine ebene Ausführung auf, wie sie beispielsweise in Zusammenhang mit den Figuren 3A bis 3I gezeigt ist. Im Unterschied zu dem Ausführungsbeispiel dieser Figuren ist die Gülleauslaufschutzvorrichtung 10 nicht einstückig mit dem Schlauchhalter ausgebildet, sondern kann an diesen beispielsweise mit einer Schraubverbindung befestigt werden beziehungsweise sein. Durch diese lösbare Schraubenbefestigung kann die Gülleauslaufschutzvorrichtung 10 an der Gülleauslaufvorrichtung einfach und schnell ausgetauscht werden, beispielsweise bei Verschleiß oder Beschädigung, oder abmontiert werden, zum Beispiel bei der Bearbeitung von Mais-Reihen, ohne dabei die übrigen Komponenten der Gülleauslaufvorrichtung wie beispielsweise Schlauchhalter und ähnliches auswechseln oder abmontieren zu müssen.

Figur 4B zeigt eine Explosionsdarstellung einer Gülleauslaufvorrichtung 100, die die Gülleauslaufschutzvorrichtung 10 des Ausführungsbeispiels der Figur 4A umfasst, auf der ein Y-förmigen Gülleauslauf 5 angebracht ist, und der an einem Schlauchhalter 6 mit einer Schraubverbindung befestigt ist. An dem Gülleauslauf 5 und insbesondere auf dem Schlauchhalter 6 ist ein Schlauch vorgesehen, der mittels Schlauchbefestigungen 7 lösbar befestigbar ist. Auf einer dem Gülleauslauf 5 gegenüberliegenden Seite sind an den Y-Armen 1a, 1b Abstützvorrichtungen 2a, 2b angebracht.

Figur 4C zeigt die an dem Schlauchhalter 6 befestigte Gülleauslaufschutzvorrichtung 10 des Ausführungsbeispiels der Figur 4A. Der Schlauchhalter 6 kann nach Montage der Gülleauslaufschutzvorrichtung 10 bereichsweise überstehen. Dies ist jedoch nicht hinderlich bei der Bodenbearbeitung.

Figur 4D zeigt einen Austausch einer nicht zur geplanten Bodenbearbeitung vorgesehene Gülleauslaufschutzvorrichtung 101 mit einer Gülleauslaufschutzvorrichtung 10 des Ausführungsbeispiels der Figuren 4A bis 4C. Die nicht zur geplanten Bodenbearbeitung vorgesehene Gülleauslaufschutzvorrichtung 101 wird an seiner Schraubverbindung von dem Schlauchhalter 6 gelöst und abmontiert (siehe die linke Figur von Figur 4D). Nach Demontage kann die Gülleauslaufschutzvorrichtung 10 mit seiner Schraubverbindung an dem Schlauchhalter 6 befestigt werden, wodurch sich ein einfacher, schneller und jederzeit durchführbarer Austausch insbesondere sogar am Acker oder Feld ermöglicht. Eine flexible Bodenbearbeitung mit unterschiedlichen Gülleauslaufschutzvorrichtungen kann mit Vorteil erzielt werden. Die Montage der gewünschten Gülleauslaufschutzvorrichtung 10 ist in den beiden mittleren Figuren der Figur 4D gezeigt. Die rechte Figur der Figur 4D zeigt das Endergebnis, also die montierte Gülleauslaufschutzvorrichtung 10 an dem Schlauchhalter 6.

Im Übrigen stimmen die Ausführungsbeispiele der Figuren 4A bis 4D mit den vorherigen Ausführungsbeispielen überein.

## Patentansprüche

1. Gülleauslaufschutzvorrichtung (10) für einen Y-förmigen Gülleauslauf (5), der zur Befestigung an einem Schlauch (6a) und/oder einer Schlauchbefestigung (7) eines Schleppschuhverteilers vorgesehen ist, aufweisend
- eine Y-förmige Befestigungsvorrichtung (1), in die der Gülleauslauf (5) ein- oder auflegbar ist, und
- Abstützvorrichtungen (2a, 2b), die an einer dem Gülleauslauf (5) gegenüberliegenden Seite der Befestigungsvorrichtung (1) angebracht sind.

2. Gülleauslaufschutzvorrichtung nach Anspruch 1, wobei die Befestigungsvorrichtung (1) im Querschnitt zwei V-förmige Ausbuchtungen aufweist, in die Gülleauslaufarme des Gülleauslaufs (5) einlegbar sind.

3. Gülleauslaufschutzvorrichtung nach einem der vorhergehenden Ansprüche, wobei die Abstützvorrichtungen (2a, 2b) in die Befestigungsvorrichtung (1) eingeklinkt sind.

4. Gülleauslaufschutzvorrichtung nach einem der vorhergehenden Ansprüche, wobei die Abstützvorrichtungen (2a, 2b) mit der Befestigungsvorrichtung (1) lösbar fest verbunden sind.

5. Gülleauslaufschutzvorrichtung nach einem der vorhergehenden Ansprüche, wobei die Abstützvorrichtungen (2a, 2b) an der Befestigungsvorrichtung (1) angeschweißt sind.

6. Gülleauslaufschutzvorrichtung nach einem der vorhergehenden Ansprüche, wobei die Befestigungsvorrichtung (1) und/oder die Abstützvorrichtungen (2a, 2b) Stahl umfassen.

7. Gülleauslaufschutzvorrichtung nach einem der vorhergehenden Ansprüche, wobei die Befestigungsvorrichtung (1) ein Befestigungselement (3) umfasst, an dem der Gülleauslauf (5) befestigbar, insbesondere einklinkbar und/oder ausklinkbar, ist.

8. Gülleauslaufschutzvorrichtung nach einem der vorhergehenden Ansprüche, wobei die Abstützvorrichtungen (2a, 2b) abgerundet ausgebildet sind.

9. Gülleauslaufvorrichtung (100) mit einem Y-förmigen Gülleauslauf (5) und einer Gülleauslaufschutzvorrichtung (10) nach einem der vorhergehenden Ansprüche.

10. Schleppschuhverteiler mit mindestens einem Schlauch (6a), wenigstens einer Schlauchbefestigung (7) und zumindest einer Gülleauslaufvorrichtung (100) nach dem vorhergehenden Anspruch.
